# FASCICULE DE BREVET EUROPEEN

(11) **EP 0 990 515 B1**
(45) Date de publication et mention de la délivrance du brevet: **01.06.2005**
(21) Numéro de dépôt: 99402330.7
(22) Date de dépôt: 23.09.1999
(51) Int. Cl.: B32B 27/08, B29C 33/68

(54) **Film comprenant une couche centrale en polyoléfine et deux couches externes en alliage polyamide/polyoléfine**
Folie mit Polyolefinmittelschicht und zwei äusseren Schichten aus einer Polyamid/Polyolefinzusammensetzung
Film comprising a polyolefin central layer and two external layers of a polyamide/polyolefin alloy

(30) Priorité: 30.09.1998 FR 9812247
(43) Date de publication de la demande: 05.04.2000
(73) Titulaire: ARKEMA, 92800 Puteaux (FR)
(72) Inventeur: Teze, Laurent, 78700 Conflans Sainte Honorine (FR); Bouilloux, Alain, 27300 Bernay (FR); Flat, Jean-Jacques, 27470 Serquigny (FR); Roumilhac, Didier, 27470 Serquigny (FR)
(74) Mandataire: Pochart, François

(56) Documents cités:
- EP-A- 0 506 515
- EP-A- 0 786 319
- WO-A-97/47468
- US-A- 5 601 770

## Description

La présente invention concerne un nouveau film comprenant une couche centrale en polyoléfine et deux couches externes en un alliage polyamide/polyoléfine ayant une tension de surface peu différente de celle de la polyoléfine de l'alliage.

Le SMC est utilisé dans la fabrication de pièces transformées aussi bien dans les domaines automobile (pare-chocs, hayons...) que ceux du nautisme (coques de bateaux) ou de l'électronique (carters). Le SMC est généralement composé d'une résine polymère réticulable, en particulier un polyester insaturé, de charges de renforcement telles que des fibres de verre, ainsi que de divers autres additifs en quantités peu importantes. Le SMC est ordinairement préparé en déposant des fibres sur une couche de résine polyester non saturé, elle-même supportée sur un film mobile, composé en général de polyéthylène ou de polyamide. Un autre film de même nature est ensuite déposé au-dessus du système résine/charge de renforcement pour former une masse composite en sandwich entre deux films. Le sandwich passe ensuite à travers une série de rouleaux de pétrissage et de compactage et est généralement enroulé sous forme de grands rouleaux. Il est alors stocké avant transformation ultérieure. Lors de la période de stockage, la résine polyester réticule partiellement, provoquant une augmentation de la viscosité du SMC, jusqu'à atteindre une consistance le rendant apte au moulage. Les utilisateurs de SMC, en général les mouleurs, coupent un morceau de dimensions appropriées à partir du rouleau, retirent par pelage le film de support et placent le SMC dans un moule chauffé pour la transformation et la cuisson complète simultanées. Ainsi, des masses composites en sandwich de SMC trouvent une application facile dans des modes opératoires de moulage par compression.

Trois propriétés concernant le film sandwich sont d'importance capitale pour les fabricants et les utilisateurs de SMC. La première a trait à la perméabilité au styrène du film pelable. Il est nécessaire que ce film pelable ait une perméabilité au styrène très faible afin d'éviter la perte de styrène monomère qui joue le rôle de diluant réactif dans le SMC. Cette perte de styrène monomère est également préjudiciable pour la santé des individus lors des opérations de fabrication du SMC et de son stockage. La deuxième propriété concerne la facilité de pelage de ce film sur la structure polyester, afin qu'il ne subsiste pas de film résiduel sur la structure et d'éviter les risques de déchirure de ce film lors des opérations de fabrication et de transformation du SMC. Enfin, la reprise d'humidité et la perméabilité à l'eau de ces films pelables doivent être très faibles pour que la qualité de la résine polyester, très sensible à l'eau, ne soit pas altérée lors des opérations de fabrication du SMC, du stockage du polyester ou de la transformation du SMC.

EP-A-0506515 décrit des films à base d'un alliage polyamide/polyoléfine, dans lequel l'agent compatibilisant est une polyoléfine fonctionnalisée (par ex. maléisée), éventuellement greffé avec un oligomère de polyamide de faible poids moléculaire. Ces films sont utilisés pour SMC (Sheet Molding Compound); ils présentent une tension de surface d'environ 32 mN/m. Cependant, une certaine épaisseur est nécessaire pour atteindre de bonnes propriétés mécaniques, ce qui implique un coût assez élevé pour le film final.

EP-A-0786319 décrit des films utiles pour le SMC et constitués d'une couche d'alliage polyamide/polyoléfine disposée entre deux couches de polyoléfine. La couche centrale d'alliage de polyamide et de polyoléfine est suffisante pour l'imperméabilité au styrène et les couches extérieures en polyoléfine conviennent bien pour le pelage d'avec le polyester du SMC. Cependant pour que cette structure tri-couches ne se délamine pas il faut soit disposer un liant entre chaque couche de polyoléfine et d'alliage, soit ajouter dans chaque couche de polyoléfine une polyoléfine greffée qui facilitera le collage. La première solution n'est pas souhaitable car elle implique une extrusion d'un film cinq couches, ce qui est difficile. La seconde solution augmente la tension de surface de chaque film de polyoléfine, et donc le film final n'est plus parfaitement adapté au SMC. De plus, il n'est pas possible de rendre la couche centrale en alliage collante par ajout d'une polyoléfine greffée, car celle-ci se retrouverait alors en fait à l'interface polyamide/polyoléfine au niveau des nodules.

Aucun des documents ci-dessus n'enseigne ni ne suggère la présente invention.

Ainsi, l'invention fournit un film comprenant:
(i) au moins une couche centrale en polyoléfine; et
(ii) au moins deux couches externes en alliage polyamide/ polyoléfine présentant une tension de surface inférieure à 36 mJ/m², avantageusement entre 31 et 34 mJ/m².

Selon un mode de réalisation, le film consiste en une couche centrale en polyoléfine entre deux couches externes en alliage polyamide/polyoléfine.

Selon un autre mode de réalisation, la polyoléfine de la couche (i) comprend une polyoléfine fonctionnalisée.

Selon un autre mode de réalisation, la polyoléfine de la couche (i) comprend un homo- ou co-polymère d'éthylène ou de propylène.

Selon un autre mode de réalisation, la polyoléfine de la couche (i) est un mélange d'une polyoléfine non-fonctionnalisée et d'une polyoléfine fonctionnalisée, ladite polyoléfine fonctionnalisée représentant jusqu'à 40% en poids du mélange.

Selon un autre mode de réalisation, la polyoléfine fonctionnalisée est un mélange PE/EPR greffé anhydride maléique.

Selon un autre mode de réalisation, l'alliage polyamide/polyoléfine est à phases co-continues.

Selon un autre mode de réalisation, l'alliage polyamide/polyoléfine comprend un agent compatibilisant.

Selon un autre mode de réalisation, l'alliage polyamide/polyoléfine est un alliage PA6/PP/Agent compatibilisant.

L'agent compatibilisant peut comprendre un homo- ou co-polymère d'éthylène ou de propylène maléisé.

L'agent compatibilisant peut comprendre du polypropylène, qui est maléisé et condensé avec un oligomère de polyamide monoaminé.

Selon un autre mode de réalisation, le rapport des épaisseurs des couches (i) et (ii) et compris entre 25/75 et 65/35.

L'invention a encore pour objet un procédé de préparation d'un film selon l'invention, comprenant l'extrusion des différentes couches dans les conditions d'extrusion des polyoléfines.

L'invention sera maintenant décrite plus en détail dans la description qui suit, et en référence aux dessins, dans lesquels:
- la figure 1 est une microphotographie d'un alliage à phases co-continues utilisé dans le cadre de l'invention (alliage A des exemples) ;
- la figure 2 est une microphotographie d'un alliage à matrice polyamide.

La polyoléfine peut être une polyoléfine non fonctionnalisée ou une polyoléfine fonctionnalisée.

Une polyoléfine non fonctionnalisée est classiquement un homopolymère ou copolymère d'alpha-oléfines ou de dioléfines, telles que par exemple, éthylène, propylène, butène-1, octène-1, butadiène.
A titre d'exemple, on peut citer :
- les homopolymères tels que polyéthylène, en particulier LDPE, HDPE, LLDPE ou VLDPE, polyéthylène métallocène ou polypropylène.
- les copolymères éthylène/alpha-oléfine tels que éthylène/propylène, les EPR.
- les copolymères blocs styrène/éthylène-butène/styrène (SEBS), styrène/butadiène/styrène (SBS), styrène/isoprène/styrène (SIS), styrène/éthylène-propylène/styrène (SEPS) et éthylène/propylène/diène (EPDM).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle, la proportion de comonomère pouvant atteindre 40% en poids.

La polyoléfine peut aussi être fonctionnalisée, à savoir être un polymère d'alpha-oléfines et des motifs réactifs (les fonctionnalités); de tels motifs réactifs sont les fonctions acides, anhydrides, ou époxy.

A titre d'exemple, on peut citer les polyoléfines précédentes greffées ou co- ou ter-polymérisées par des époxydes insaturés tels que le (méth)acrylate de glycidyle, ou par des acides carboxyliques ou les sels ou esters correspondants tels que l'acide (méth)acrylique (celui-ci pouvant être neutralisé totalement ou partiellement par des métaux tels que Zn, etc.) ou encore par des anhydrides d'acides carboxyliques tels que l'anhydride maléique. Une polyoléfine fonctionnalisée d'un mode de réalisation est par exemple un mélange PE/EPR, dont le ratio en poids peut varier entre de larges mesures, par exemple entre 40/60 et 90/10, ledit mélange étant co-greffé avec un anhydride, notamment anhydride maléique, selon un taux de greffage par exemple de 0,01 à 5% en poids.

La polyoléfine fonctionnalisée peut être les (co)polymères suivants, greffés avec anhydride maléique ou méthacrylate de glycidyle, dans lesquels le taux de greffage est par exemple de 0,01 à 5% en poids:
- du PE, du PP, des copolymères de l'éthylène avec propylène, butène, hexène, ou octène contenant par exemple de 35 à 80% en poids d'éthylène;
- des copolymères éthylène et acétate de vinyle (EVA), contenant jusqu'à 40% en poids d'acétate de vinyle;
- des copolymères éthylène et (méth)acrylate d'alkyle, contenant jusqu'à 40% en poids de (méth)acrylate d'alkyle;
- des copolymères éthylène et acétate de vinyle (EVA) et (méth)acrylate d'alkyle, contenant jusqu'à 40% en poids de comonomères;
- les copolymères éthylène/propylène majoritaires en propylène greffés par de l'anhydride maléique puis condensés avec du polyamide (ou un oligomère de polyamide) monoaminé (produits décrits dans EP-A-0342066).

La polyoléfine fonctionnalisée peut aussi être un co- ou ter-polymère d'au moins les motifs suivants: (1) éthylène, (2) (méth)acrylate d'alkyle ou acide (méth)acrylique ou ester vinylique d'acide carboxylique saturé et (3) anhydride tel que anhydride maléique ou époxy tel que (méth)acrylate de glycidyle.
A titre d'exemple de polyoléfines fonctionnalisées de ce dernier type, on peut citer les copolymères suivants, où l'éthylène représente de préférence au moins 60% en poids et où le termonomère représente par exemple de 0,1 à 10% en poids du copolymère :
- les copolymères éthylène/(méth)acrylate d'alkyle ou acide (méth)acrylique/anhydride maléique ou méthacrylate de glycidyle;
- les copolymères éthylène/acétate de vinyle/anhydride maléique ou méthacrylate de glycidyle;
- les copolymères éthylène/acétate de vinyle/(méth)acrylate d'alkyle ou acide (méth)acrylique/anhydride maléique ou méthacrylate de glycidyle.

Dans les copolymères qui précèdent, l'acide (méth)acrylique peut être salifié avec Zn ou Li.

Le terme "(méth)acrylate d'alkyle" désigne les méthacrylates et les acrylates d'alkyle en C1 à C6, et peut être choisi parmi l'acrylate de méthyle, l'acrylate d'éthyle, l'acrylate de n-butyle, l'acrylate d'iso-butyle, l'acrylate d'éthyl-2-hexyle, l'acrylate de cyclohexyle, le méthacrylate de méthyle et le méthacrylate d'éthyle.

Par ailleurs, les polyoléfines précitées peuvent aussi être réticulées par tout procédé ou agent approprié (diépoxy, diacide, peroxyde, etc.); le terme polyoléfine fonctionnalisée comprend aussi les mélanges des polyoléfines précitées avec un réactif difonctionnel tel que diacide, dianhydride, diépoxy, etc. susceptible de réagir avec celles-ci.

Les copolymères mentionnés ci-dessus peuvent être copolymérisés de façon statistique ou séquencée et présenter une structure linéaire ou ramifiée.

Le poids moléculaire, l'indice MFI, la densité de ces polyoléfines peuvent aussi varier dans un large mesure, ce que l'homme de l'art appréciera.

Des mélanges de polyoléfines, fonctionnalisées ou non, sont aussi possibles. Des mélanges appropriés sont ceux dans lesquels une partie majoritaire est composée de polyoléfine non fonctionnalisée et l'autre partie est une polyoléfine fonctionnalisée, ladite polyoléfine fonctionnalisée représentant jusqu'à 40% en poids du mélange. La polyoléfine fonctionnalisée est notamment le mélange EP/EPR greffé anhydride décrit plus haut.

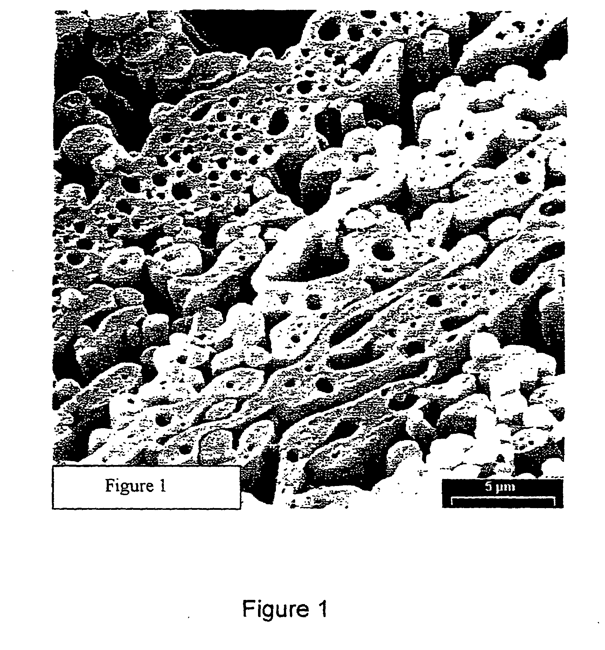

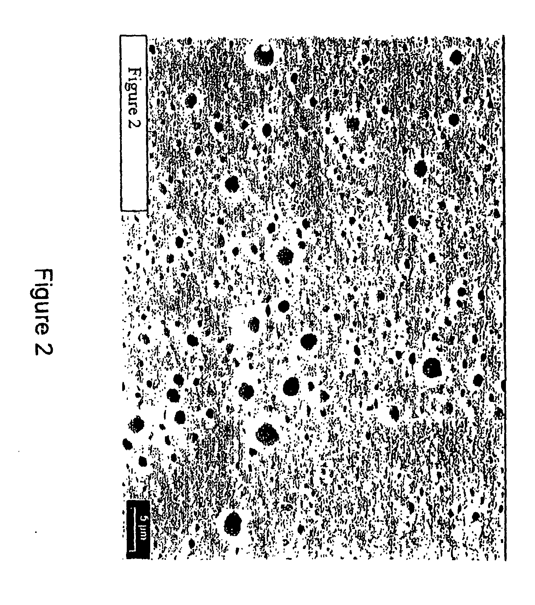

L'alliage polyamide/polyoléfine ayant une tension de surface faible peut notamment être obtenu par exemple lorsqu'il est à phases co-continues. Ce terme "alliage polyamide/polyoléfine à phases co-continues" désigne les produits comprenant un polyamide, selon l'acceptation classique; une polyoléfine, telle que décrite ci-dessus, et lorsque celle-ci ne contient pas suffisamment de fonctionnalité pour assurer la compatibilisation avec le polyamide un agent compatibilisant; la polyoléfine et le polyamide étant présents sous forme de deux phases co-continues, à savoir qu'aucune des deux phases n'est présentes sous forme dispersée dans l'autre phase. La polyoléfine peut être fonctionnalisée ou non, et elle peut être le mélange d'une polyoléfine non-fonctionnalisée et d'une polyoléfine fonctionnalisée. Cet alliage est distinct des alliages à matrice polyamide. La figure 1 est une microphotographie d'un alliage à phases co-continues utilisé dans le cadre de l'invention; on remarque que les phases sont interpénétrantes (ou interpénétrées). Un alliage à matrice polyamide (et nodules de polyoléfine dispersés dans cette phase) correspond à la microphotographie de la figure 2.

L'alliage utilisé dans le cadre de l'invention présentera en général une viscosité suffisante pour être extrudé en film par extrusion cast ou par extrusion soufflage et présente par exemple un MFI de 0,5 à 20 (en g/10min mesuré à 235°C sous 2,16kg).

Le terme "polyamide" est utilisé dans son sens commun et désigne les produits de condensation d'alpha-omega-amino-acides, ou les lactames correspondants ou une ou plusieurs combinaisons sensiblement stoechiométriques d'une ou plusieurs diamines aliphatiques et/ou cycloaliphatiques et/ou aromatique-aliphatiques, ou de leurs sels, avec un ou plusieurs diacides carboxyliques aliphatiques ou aromatiques, ou des mélanges.

A titre d'exemple, le polyamide est le PA6, PA6,6, PA6,10, PA11, PA12, PA6,12, PA12,12 et PA6/6.6 (c'est-à-dire les polyamides obtenus à partir de caprolactame, de l'hexaméthylènediamine et de l'acide adipique) et PA6/12 (caprolactame et lauryllactame). Le poids moléculaire des polyamides peut varier dans un large mesure, ce que l'homme de l'art appréciera.

Le ratio polyamide/polyoléfine dans l'alliage peut varier, ce qu'appréciera l'homme de l'art, l'alliage final ne devant cependant de préférence pas présenter de phase continue dans laquelle est dispersée une autre phase. Par exemple, le polyamide représente, en poids, de 40 à 65%, avantageusement de 50 à 60%, et plus particulièrement de 55 à 60%, du poids de l'alliage.

L'agent compatibilisant est présent en une quantité suffisante pour assurer la compatibilité, à savoir de préférence la dispersion l'une dans l'autre des deux phases co-continues. Par exemple, l'agent compatibilisant peut représenter jusqu'à 25% en poids de l'alliage final.

L'agent compatibilisant est un produit connu en soi pour compatibiliser les polyamides et les polyoléfines, et peut être notamment une polyoléfine fonctionnalisée, comme celle décrite ci-dessus.

Des exemples de ces agents compatibilisants sont :
- le polyéthylène, le polypropylène, les copolymères d'éthylène, tel que éthylène/propylène, éthylène/butène, SEBS, SBS, SIS, SEPS et EPDM, tous ces produits étant greffés par de l'anhydride maléique ou du méthacrylate de glycidyle;
- les copolymères éthylène/(méth)acrylate d'alkyle/anhydride maléique, l'anhydride maléique étant greffé ou copolymérisé;
- les copolymères éthylène/acétate de vinyle/anhydride maléique, l'anhydride maléique étant greffé ou copolymérisé;
- les deux copolymères précédents dans lesquels l'anhydride est remplacé en tout ou partie par du méthacrylate de glycidyle;
- les copolymères éthylène/acide (méth)acrylique, et éventuellement leurs sels;
- les copolymères éthylène/(méth)acrylate d'alkyle/méthacrylate de glycidyle, le méthacrylate de glycidyle étant greffé ou copolymérisé;
- les copolymères greffés constitués d'au moins un oligomère mono-aminé de polyamide et d'un (co)polymère d'alpha-monooléfine greffé par un monomère susceptible de réagir avec la fonction amine dudit oligomère;
De tels alliages, ou les agents compatibilisants, sont décrits dans les brevets US-P-5342806, US-P-5070145, EP-A-0218665, EP-A-0342066, EP-A-0742236, EP-A-0802207 et FR-A-2291225, dont le contenu est incorporé dans la présente demande.

Dans ces alliages peuvent être ajoutés de façon classique des élastomères tels que des EPR maléisés, des EPDM maléisés et autres.

Selon un mode de réalisation, l'alliage polyamide/polyoléfine est un alliage PA6/PP/Agent compatibilisant.

L'agent compatibilisant est de préférence à base d'un homo- ou co-polymère d'éthylène ou de propylène.

L'agent compatibilisant est de préférence maléisé (par greffage ou copolymerisation).

Des exemples d'agent compatibilisant, notamment destiné à être utilisé en relation avec du PA6 et du PP sont les suivants:
- PP maléisé (par ex. à un taux = 0,5%) ;
- SEBS maléisé (par ex. à un taux = 0,5%) ;
- EPR statistique maléisé (par ex. à un taux = 0,5%) ;
- EPDM maléisé (par ex. à un taux = 0,5%) ;
- PP maléisé (par ex. à un taux = 0,5%) greffé (condensé) oligomère de PA, notamment PA6, PA11, PA12 PA6.6/12, de préférence PA6, ledit oligomère étant avantageusement monoaminé (avec un MWn par ex. de Mn=1500) ;

La teneur en agent compatibilisant est comprise par exemple entre 5 et 15% en poids, par exemple environ 10%.

Un alliage préféré est un alliage PA6/PP/Agent compatibilisant, dans lequel l'agent compatibilisant est à base d'un homo- ou co-polymère d'éthylène ou de propylène, qui est maléisé et éventuellement greffé (condensé) par un oligomère de polyamide (monoaminé).

Le film selon l'invention présente donc une tension de surface faible, inférieure à 36 mJ/m², de préférence comprise entre 31 et 34 mJ/m² , c'est-à-dire une tension de surface faible, et présente un caractère quasi apolaire; le film selon l'invention est donc sensiblement de type oléfiniques.

Le film selon l'invention est donc sensiblement non-collant, et présente dans le même temps des propriétés barrière. Il est donc approprié pour des utilisations aussi diverses que du film d'emballage par exemple pour de la viande, en tant que peau de saucisse, film SMC, etc. Par ailleurs, si les films selon l'invention présentent certaines propriétés intéressantes des polyoléfines, ils ne présentent pas les défauts traditionnels de ceux-ci. Par ailleurs, les films selon l'invention permettent le plus souvent de s'affranchir d'une couche de liant entre la couche de polyoléfine et la couche d'alliage, ce qui permet d'éviter un film à 5 couches, mais sans nuire aux propriétés d'adhésion entre les couches. Avantageusement on ajoute dans la couche centrale un produit destiné à faciliter l'adhésion des couches, sans utiliser de couche de liant. Ce produit peut être une polyoléfine greffée, un agent compatibilisant tel que cités plus haut.

Il est clair que des additifs et adjuvants classiques, ainsi que d'autres polymères peuvent être ajoutés dans les différentes couches des films selon l'invention, en des quantités ne nuisant pas aux propriétés recherchées et classiques pour l'homme de l'art. Des exemples de tels additifs sont des anti-UV, anti-oxydants, pigments, des charges telles que silice, fibres, etc.

L'épaisseur du film selon l'invention est classique, par exemple entre 1 et 500 µm, classiquement de 5 à 100 µm. Le rapport des épaisseurs des couches (i) et (ii) peut être compris par exemple entre 25/75 et 65/35. Le film selon l'invention peut comprendre d'autres couches, par exemple d'autres polymères, entre les couches (i) et (ii) ou à l'extérieur des couches (ii); les films selon l'invention peuvent aussi comprendre d'autres types de film (papier ou métal tel qu'aluminium). Les films selon l'invention peuvent aussi être laminés sur tout substrat approprié. On préférera cependant des films consistant en une couche centrale en polyoléfine entre deux couches externes en alliage polyamide/polyoléfine, utilisés tels quels.

Les films selon l'invention peuvent être préparés par tout procédé classique, notamment par extrusion. (par exemple sur des extrudeuses mono-vis à profil malaxeur, des extrudeuses bi-vis, extrudeuses de gaine, etc.). On peut par exemple utiliser une extrudeuse tri-couches , avec des températures de 210 à 250°C pour la couche de polyoléfine et de 240 à 260°C pour la couche d'alliage.

Les exemples suivants illustrent l'invention sans la limiter.

### Exemples.

Les compositions sont réalisées à partir des polymères suivants :
**A** alliage comprenant
   593 parts de PA6 de MFI 6-7 (g/10min à 235°C sous 2,16kg) ;
   296 parts de PP ;
   98,8 parts de PP greffé anhydride maléique puis condensé avec un oligomère PA6 monoaminé ;
   5 parts antioxydant ;
   5 parts mélange maître jaune.
   MFI final de l'alliage 1,5-2,5 (g/10min à 235°C sous 2,16kg).
**B** alliage comprenant :
   642 parts de PA6 de MFI 15-20 (g/10min à 235°C sous 2,16kg) ;
   247 parts de PEHD d=0,940 ;
   98 parts de copolymère éthylène/acrylate de butyle/anhydride maléique contenant 9% en poids d'acrylate et 3% d'anhydride de MFI 5 (g/10min à 190°C sous 2,16kg) ;
   5 parts antioxydant ;
   5 parts mélange maître jaune.
   MFI final de l'alliage 1-4 (g/10min à 235°C sous 2,16kg).
**C** alliage similaire à l'alliage B, comprenant un mélange maître vert.
**D** alliage similaire à l'alliage B, comprenant un mélange maître naturel.
**E** mélange 80/20 en poids PEHD/polyoléfine fonctionnalisée dans lequel la polyoléfine fonctionnalisée comprend un mélange en poids de 70 parts de PE d=0,920 MFI 4 (g/10min à 190°C sous 2,16kg) et 30 parts de copolymère EPR, le mélange étant co-greffé avec 0,5% d'anhydride maléique.
**F** mélange 80/20 en poids PEHD/polyoléfine fonctionnalisée dans lequel la polyoléfine fonctionnalisée comprend un mélange en poids de 75 parts de PE d=0,920 MFI 4 (g/10min à 190°C sous 2,16kg) et 25 parts de copolymère EPR, le mélange étant co-greffé avec 0,5% d'anhydride maléique.
**G** mélange 70/30 en poids PEHD/polyoléfine fonctionnalisée du mélange E.

Dans ces exemples, les films sont réalisés sur une extrudeuse tri-couches avec une filière de 150mm, un entrefer de 0,7mm, une vitesse de tirage de 9m/mn, un taux de gonflage de 2,1 pour une largeur à plat de 500mm ; on utilise des températures de 210 à 250°C pour la couche de polyoléfine et de 240 à 260°C pour la couche d'alliage.

On fabrique des films d'épaisseur totale de 24 µm, dont les caractéristiques sont résumées dans le tableau ci-après. La tension de surface est déterminée en mesurant, à l'aide d'un goniomètre, l'angle de contact à l'avancée à l'équilibre de gouttes de liquides standards sur le substrat conformément à la méthode décrite dans Fowkes F.M., Ind. Eng. Chem., 56 (1964) 40 ou dans Owens D.K. and Wendt R.C., J. Appl. Polymer Sci. 13 (1969) 1741; on indique aussi les parties apolaire et polaire de la tension de surface.

| Ex. | Type de polymère | Ratio épaisseurs des couches | Tension de surface (mJ/m²) | Partie apolaire (mJ/m²) | Partie polaire (mJ/m²) |
|---|---|---|---|---|---|
| 1 | A | 100 | 32,7 | 32 | 0,7 |
| 2 | E/B/E | 30/40/30 | 33,6 | 31,5 | 2,1 |
| 3 | F/C/F | 30/40/30 | 31,6 | 31,5 | 0,1 |
| 4 | C/G/C | 25/50/25 | 37,2 | 33,9 | 3,3 |
| 5 | D/G/D | 25/50/25 | 39,3 | 34,5 | 4,8 |
| 6 | A/G/A | 25/50/25 | 32,1 | 30,9 | 1,2 |

Les exemples 1-5 sont des exemples comparatifs, l'invention correspondant à l'exemple 6.
- les exemples 1, 2 et 3 ont une tension de surface faible, de l'ordre de 31-34 mJ/m² et présentent un caractère quasi apolaire ; ceci est dû aux couches de polyoléfine.
- les exemples 4 et 5 présentent une tension de surface élevée, de l'ordre de 37-39 mJ/m² et présentent une polarité marquée (de type polyamide).
- l'exemple 6, selon l'invention, présente une tension de surface de l'ordre de 32 mJ/m², et présente un caractère quasi apolaire ; ce film est donc de type oléfinique.

L'invention fournit donc des films de type oléfinique mais ne présentant pas les défauts traditionnels des polyoléfines.

## Revendications

1. Film comprenant:
(i) au moins une couche centrale en polyoléfine; et
(ii) au moins deux couches externes en alliage polyamide/polyoléfine présentant une tension de surface inférieure à 36 mJ/m².

2. Film selon la revendication 1, la tension de surface étant comprise entre 31 et 34 mJ/m² .

3. Film selon la revendication 1 ou 2, consistant en une couche centrale en polyoléfine entre deux couches externes en alliage polyamide/polyoléfine.

4. Film selon l'une quelconque des revendications 1 à 3, dans lequel la polyoléfine de la couche (i) comprend une polyoléfine fonctionnalisée.

5. Film selon l'une quelconque des revendications 1 à 4, dans lequel la polyoléfine de la couche (i) comprend un homo- ou co-polymère d'éthylène ou de propylène.

6. Film selon l'une quelconque des revendications 1 à 5, dans lequel la polyoléfine de la couche (i) est un mélange d'une polyoléfine non-fonctionnalisée et d'une polyoléfine fonctionnalisée, ladite polyoléfine fonctionnalisée représentant jusqu'à 40% en poids du mélange.

7. Film selon l'une quelconque des revendications 4 à 6, dans lequel la polyoléfine fonctionnalisée est un mélange PE/EPR greffé anhydride maléique.

8. Film selon l'une quelconque des revendications 1 à 7, dans lequel l'alliage polyamide/polyoléfine est à phases co-continues.

9. Film selon l'une quelconque des revendications 1 à 8, dans lequel l'alliage polyamide/polyoléfine comprend un agent compatibilisant.

10. Film selon l'une quelconque des revendications 1 à 9, dans lequel l'alliage polyamide/polyoléfine est un alliage PA6/PP/Agent compatibilisant.

11. Film selon la revendication 9 ou 10, dans lequel l'agent compatibilisant comprend un homo- ou co-polymère d'éthylène ou de propylène maléisé.

12. Film selon la revendication 9 ou 10, dans lequel l'agent compatibilisant comprend du polypropylène, qui est maléisé et condensé avec un oligomère de polyamide monoaminé.

13. Film selon l'une quelconque des revendications 1 à 12, dans lequel le rapport des épaisseurs des couches (i) et (ii) et compris entre 25/75 et 65/35.

14. Procédé de préparation d'un film selon l'une quelconque des revendications 1 à 13, comprenant l'extrusion des différentes couches dans les conditions d'extrusion des polyoléfines.

## Patentansprüche

1. Folie aufweisend:
(i) mindestens eine mittige Schicht aus Polyolefin; und
(ii) mindestens zwei äußere Schichten aus Polyamid/Polyolefin-Legierung mit einer Oberflächenspannung unter 36 mJ/m².

2. Folie nach Anspruch 1, wobei die Oberflächenspannung zwischen 31 und 34 mJ/m² liegt.

3. Folie nach Anspruch 1 oder 2, die aus einer mittigen Schicht aus Polyolefin zwischen zwei äußeren Schichten aus Polyamid/Polyolefin-Legierung besteht.

4. Folie nach einem der Ansprüche 1 bis 3, bei der das Polyolefin der Schicht (i) ein funktionalisiertes Polyolefin aufweist.

5. Folie nach einem der Ansprüche 1 bis 4, bei der das Polyolefin der Schicht (i) ein Homopolymer oder Copolymer von Ethylen oder Propylen aufweist.

6. Folie nach einem der Ansprüche 1 bis 5, bei der das Polyolefin der Schicht (i) eine Mischung aus einem nicht funktionalisierten Polyolefin und einem funktionalisierten Polyolefin ist, wobei das funktionalisierte Polyolefin bis zu 40 Gew.% der Mischung ausmacht.

7. Folie nach einem der Ansprüche 4 bis 6, bei der das funktionalisierte Polyolefin eine Mischung aus PE/EPR, gepfropft mit Maleinsäureanhydrid, ist.

8. Folie nach einem der Ansprüche 1 bis 7, bei der die Polyamid/Polyolefin-Legierung in co-kontinuierlichen Phasen vorliegt.

9. Folie nach einem der Ansprüche 1 bis 8, bei der die Polyamid/Polyolefin-Legierung ein kompatibel machendes Mittel aufweist.

10. Folie nach einem der Ansprüche 1 bis 9, bei der die Polyamid/Polyolefin-Legierung eine Legierung aus PA6/PP/kompatibel machendem Mittel ist.

11. Folie nach Anspruch 9 oder 10, bei der das kompatibel machende Mittel ein maleinisiertes Homopolymer oder Copolymer von Ethylen oder Propylen aufweist.

12. Folie nach Anspruch 9 oder 10, bei der das kompatibel machende Mittel Polypropylen aufweist, das maleinisiert und mit einem monoaminierten Polyamid-Oligomer kondensiert ist.

13. Folie nach einem der Ansprüche 1 bis 12, bei der das Verhältnis der Dicken der Schichten (i) und (ii) zwischen 25/75 und 65/35 liegt.

14. Verfahren zur Herstellung einer Folie nach einem der Ansprüche 1 bis 13, aufweisend die Extrusion verschiedener Schichten unter Polyolefin-Extrusionsbedingungen.

## Claims

1. A film comprising
(i) at least one central layer of polyolefin; and
(ii) at least two outer layers of a polyamide/polyolefin alloy having a surface tension below 36 mJ/m².

2. The film according to claim 1, the surface tension being comprised between 31 and 34 mJ/m².

3. The film according to claim 1 or 2, consisting of a central layer in polyolefin between two outer layers of polyamide/polyolefin alloy.

4. The film according to one of claims 1 to 3, in which the polyolefin of layer (i) comprises a functionalized polyolefin.

5. The film according to one of claims 1 to 4, in which the polyolefin of layer (i) comprises a homo- or co-polymer of ethylene or propylene.

6. The film according to any one of claims 1 to 5, in which the polyolefin of layer (i) is a mixture of a non-functionalized polyolefin and a functionalized polyolefin, said functionalized polyolefin constituting up to 40% by weight of said mixture.

7. The film according to any one of claims 4 to 6, wherein the functionalized polyolefin is a maleic anhydride grafted PE/EPR mixture.

8. The film according to anyone of claims 1 to 7, wherein the polyamide/polyolefin alloy has co-continuous phases.

9. The film according to anyone of claims 1 to 8, wherein the polyamide/polyolefin alloy comprises a compatibilizing agent.

10. The film according to any one of claims 1 to 9, wherein the polyamide/polyolefin alloy is a PA6/PP/compatibilizing agent alloy.

11. The film according to claim 9 or 10, wherein said compatibilizing agent comprises a homo- or co-polymer of ethylene or propylene which is maleic-functionalized.

12. The film according to claim 9 or 10, wherein said compatibilizing agent comprises polypropylene, maleic-functionalized and condensed with an oligomer of monoamino polyamide.

13. The film according to any one of claims 1 to 12, wherein the ratio of the thicknesses of layers (i) and (ii) is comprised between 25/75 and 65/35.

14. A method for preparing a film according to any one of claims 1 to 13, comprising extruding the layers under conditions for extrusion of polyolefins.
